# EUROPEAN PATENT APPLICATION

(11) **EP 2 434 760 A1**
(43) Date of publication of application: **28.03.2012**
(21) Application number: 11165251.7
(22) Date of filing: 09.05.2011
(51) Int. Cl.: H04N 7/24, H04H 60/82

(54) **Broadcast transmitter, broadcast receiver, and broadcast transmission method**

(30) Priority: 24.09.2010 JP 2010214404
(71) Applicant: Kabushiki Kaisha Toshiba, Tokyo 105-8001 (JP)
(72) Inventor: Hirota, Atsushi, Tokyo 105-8001 (JP); Yoshida, Osamu, Tokyo 105-8001 (JP); Kawada, Hiroshi, Tokyo 105-8001 (JP)
(74) Representative: HOFFMANN EITLE

(57) **Abstract**

According to one embodiment, a broadcast transmitter includes a generator (14) and a transmitter (16). The generator (14) generates service information including event information table information that describes format information indicating the format of distribution content corresponding to broadcast content distributed via a communication network (4). The transmitter (16) multiplexes the service information into a transport stream and transmits the transport stream.

## Description

### FIELD

Embodiments described herein relate generally to a broadcast transmitter, a broadcast receiver, and a broadcast transmission method.

### BACKGROUND

Generally, in digital broadcasting, event information table (EIT) information describing the name (title), details, and the like of a broadcast program (content) is multiplexed with a video signal and an audio signal of the content into a transport stream (TS) defined by MPEG-2 systems. The transport stream is transmitted as a broadcast signal. The EIT information is one of various information tables also called service information (SI) defined by the Association of Radio Industries and Businesses (ARIB) standard (STD)-B10 or the like. The EIT information is used to select a channel, display an electronic program guide (EPG), and the like.

Broadcast stations are now trying to distribute a program (content) broadcasted by digital broadcasting via a communication network such as the Internet. The distribution via a communication network offers a greater degree of freedom in usage band and the selection of a format than via broadcasting. Besides, the broadcast stations can provides various services using the same content material as in the case of broadcasting with the latest technology. The EIT information describes only the name, details, and the like of broadcast content, and does not describe whether the content is distributed via a communication network such as the Internet and related information on the content. Accordingly, if broadcast content is distributed via a communication network such as the Internet, the format of the content cannot be recognized unless it is checked by, for example, receiving the distribution of the content from a distribution server as a distribution source.

For example, in digital broadcasting, it is required to broadcast content using a broadcast band determined in advance. Besides, in the nature of the service, if the format of video and audio, encoding method, transmission method, and the like are once defined, basically, they are used constantly for a long time. As a result, content other than those in a conventional format defined by the broadcast standard, such as content in a three-dimension (3D) format compatible with 3D televisions capable of delivering 3D (stereoscopic) visions and video content of about 4000 x 2000 pixels (4K2K) higher in resolution than full high vision or high definition (HD), is sometimes delivered via a communication network such as the Internet. If broadcast content is separately delivered via a communication network such as the Internet, it cannot be determined whether the content is reproducible on the own device unless it is checked by, for example, accessing a distribution server as a distribution source and receiving the distribution of the content therefrom.

### SUMMARY

To overcome the problems and achieve the object mentioned above, in general, according to one embodiment, a broadcast transmitter comprises a generator and a transmitter. The generator is configured to generate service information including event information table information that describes format information indicating the format of distribution content corresponding to broadcast content distributed via a communication network. The transmitter is configured to multiplex the service information into a transport stream and transmit the transport stream.

### BRIEF DESCRIPTION OF THE SEVERAL VIEWS OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary schematic diagram of a broadcasting system assuming the use of a communication network according to an embodiment;
FIG. 2 is an exemplary block diagram of a broadcast transmitter in the embodiment;
FIG. 3 is an exemplary flowchart of the operation of the broadcast transmitter in the embodiment;
FIG. 4 is an exemplary schematic diagram of a data structure of event information table (EIT) information in the embodiment;
FIG. 5 is an exemplary conceptual diagram of a description of the EIT information in the embodiment;
FIG. 6 is an exemplary conceptual diagram of a description of the EIT information in the embodiment;
FIG. 7 is an exemplary conceptual diagram of a description of the EIT information in the embodiment;
FIG. 8 is an exemplary block diagram of a broadcast receiver in the embodiment;
FIG. 9 is an exemplary flowchart of the operation of the a broadcast receiver in the embodiment;
FIG. 10 is an exemplary conceptual diagram of a selection screen in the embodiment; and
FIG. 11 is an exemplary flowchart of the operation of the broadcast receiver to reproduce distribution content in the embodiment.

### DETAILED DESCRIPTION

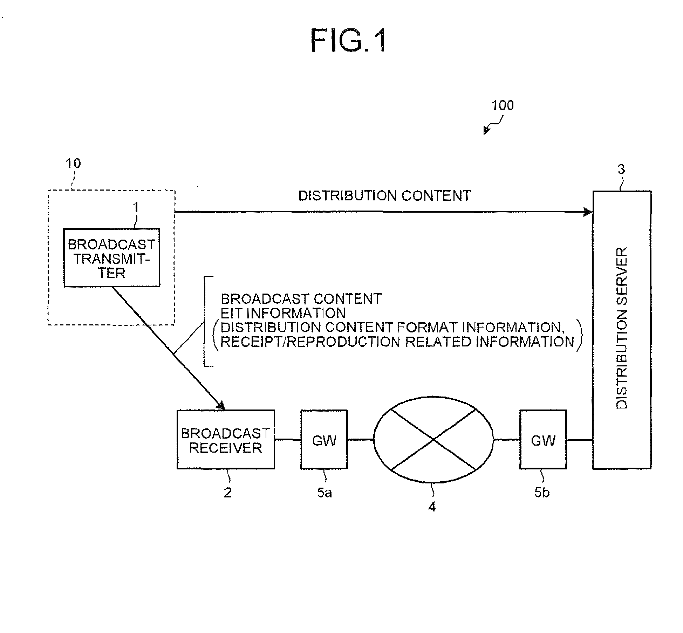

FIG. 1 illustrates an example of a broadcasting system 100 assuming the use of a communication network according to an embodiment. As illustrated in FIG. 1, the broadcasting system 100 comprises a broadcast transmitter 1, a broadcast receiver 2, and a distribution server 3. The broadcast transmitter 1 is a digital broadcast device and installed in a broadcast station 10 or the like. The broadcast transmitter 1 multiplexes event information table (EIT) information and data such as video and audio of content into a transport stream (TS) and transmits it to the distribution server 3.

The broadcast receiver 2 receives broadcast content multiplexed into a TS and EIT information. The broadcast receiver 2 may be, for example, a television, a recorder that records content on a large capacity storage medium such as a hard disk drive (HDD), or a tuner capable of receiving digital broadcasting. The broadcast receiver 2 is connected to a communication, network 4 via a GW 5a such as a router. It is assumed herein that "broadcast content" refers to content that is multiplexed into a TS and broadcasted by the broadcast transmitter 1, and is distinguished from those distributed via Internet protocol (IP) broadcasting.

The distribution server 3 distributes content via video-on-demand (VOD), IP broadcasting, or the like. The distribution server 3 is connected to the communication network 4 via a GW 5b such as a router. Thus, the broadcast receiver 2 can receive content (distribution content) distributed by the distribution server 3 through the communication network 4.

The broadcast station 10 sometimes delivers part of broadcast contents broadcasted from the broadcast transmitter 1 to the broadcast receiver 2 to the broadcast receiver 2 via the communication network 4 from the distribution server 3 as distribution content in a three-dimensional (3D) format compatible with 3D televisions capable of delivering 3D (stereoscopic) visions or distribution content of about 4000 × 2000 pixels (4K2K) higher in resolution than full high vision or high definition (HD). Among broadcast contents, regarding such distribution content as delivered via the communication network 4, the broadcast transmitter 1 broadcasts EIT information describing information related to the receipt and reproduction of the distribution content and information on the format of the distribution content to the broadcast receiver 2. Accordingly, referring to the EIT information from the broadcast transmitter 1, the broadcast receiver 2 can recognize the format of the distribution content delivered via the communication network 4 without accessing the distribution server 3 to check it.

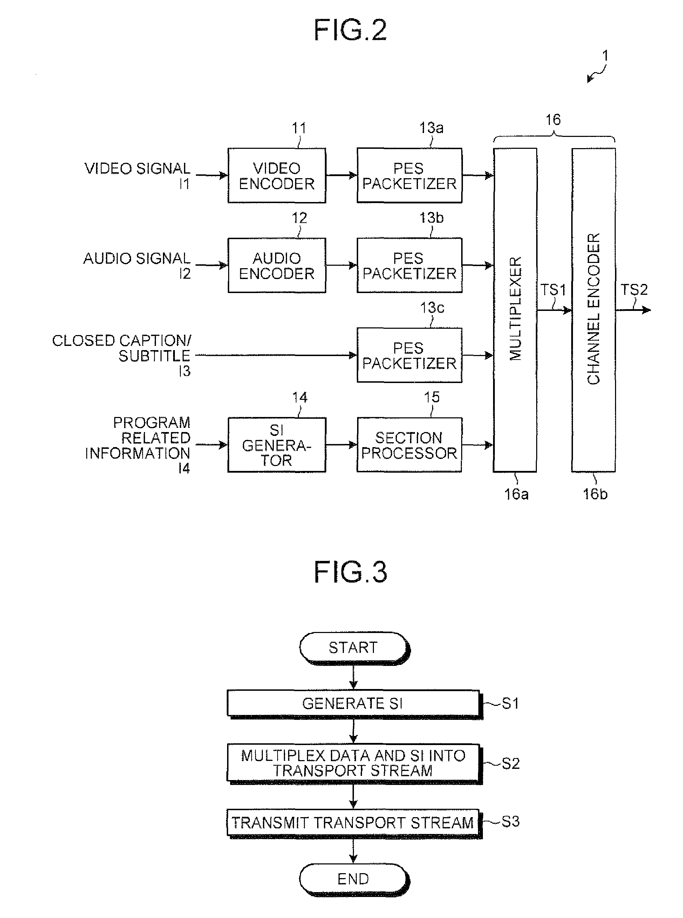

In the following, the configuration and operation of the broadcast transmitter 1 will be described. FIG. 2 is a block diagram of the broadcast transmitter 1. FIG. 3 is a flowchart illustrating an example of the operation of the broadcast transmitter 1.

As illustrated in FIG. 2, the broadcast transmitter 1 comprises a video encoder 11, an audio encoder 12, packetized elementary stream (PES) packetizers 13a, 13b, and 13c, a service information (SI) generator 14, a section processor 15, and a transmitter 16. The video encoder 11 encodes a video signal I1 related to broadcast content. The audio encoder 12 encodes an audio signal I2 related to broadcast content. The PES packetizers 13a, 13b, and 13c packetize the video signal encoded by the video encoder 11, the audio signal encoded by the audio encoder 12, data such as closed caption or subtitle.

The SI generator 14 generates SI such as a service description table (SDT) and EIT based on program related information 14. Examples of the program related information 14 include information on a channel to send a program, information on programs (contents) being and to be broadcasted, and the like. The section processor 15 sections the SI generated by the SI generator 14, i.e., stores the SI in an SI table in a section format. The program related information I4 may include information on broadcast content that has already been broadcasted in addition to broadcast content to be broadcasted. That is, the program related information 14 may include information on programs (contents) broadcasted in the past, present, and future.

If broadcast content is delivered via the communication network 4, the program related information I4 may include, apart from the title, details, and the like of the broadcast content (program), distribution content format information on the format of the distribution content and receipt/reproduction related information related to the receipt and reproduction of the distribution content. Thus, the SI generator 14 generates SI including EIT information describing the distribution content format information and the receipt/reproduction related information of the distribution content corresponding to the broadcast content delivered via the communication network 4 (FIG. 3, SI).

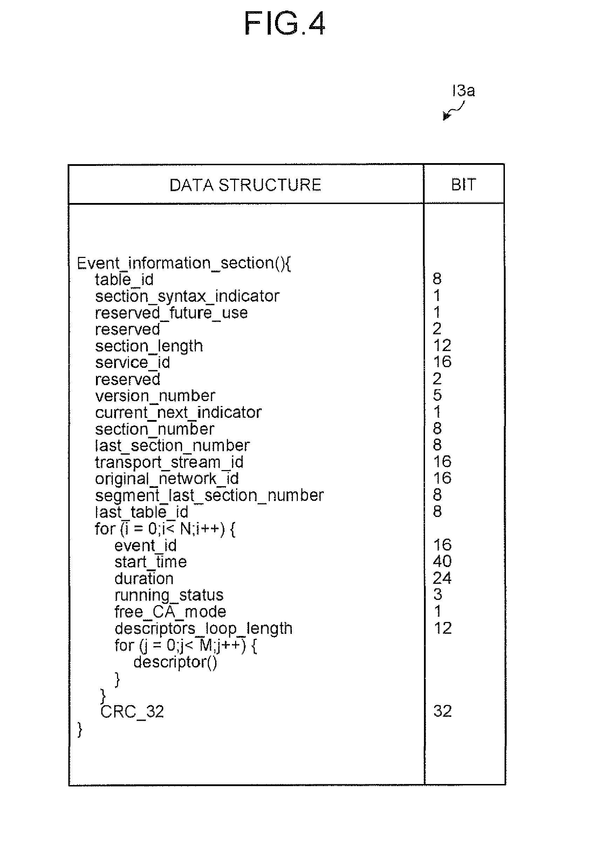

FIG. 4 illustrates an example of a data structure of EIT information I3a. As illustrated in FIG. 4, the EIT information I3a describes, below Event information section(), information on a channel to transmit programs and information on each of the programs transmitted via the channel such as, for example, the start time and the length of a program with an identifier (event_id) that identifies the program. In the following descriptor area, i.e., descriptor(), a descriptor defined separately is inserted as required to additionally describe various types of program related information. For example, the program related information I4 is described in the descriptor area.

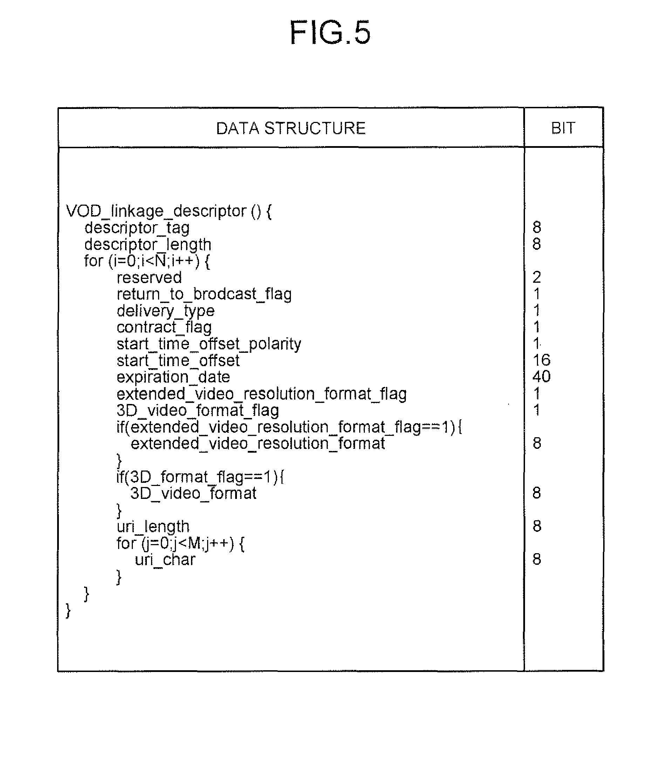

FIGS. 5 to 7 are conceptual diagrams of descriptions of the EIT information 13a. More specifically, FIGS. 5 to 7 illustrate an example of a descriptor that can be used in the descriptor area of the EIT information I3a and the description. As illustrated in FIG. 5, in the embodiment,
VOD_linkage descriptor() is newly defined, and distribution content format information and receipt/reproduction related information provided separately in combination via the communication network 4 are described therein with respect to each distribution content.

Specific examples of the receipt/reproduction related information include return_to_broadcast_flag, delivery-type, contract_flag, start__time_offset__polarity, start_time_offset, expiration_date, uri_char, and the like.

The return_to_broadcast_flag is a one-bit flag indicating whether there is a need to return to a broadcast received before reproduction of distribution content upon completion of the reproduction. For example, 0 indicates that there is no need to return, while 1 indicates that there is a need to return to a broadcast received before reproduction of distribution content.

The delivery-type is a one-bit flag indicating how to distribute distribution content. For example, 0 indicates streaming distribution, while indicates download distribution.

The contract_flag is a one-bit flag indicating whether the receipt/reproduction of distribution content requires a contract (whether it is charged or free). For example, 0 indicates no contract is required (charge-free), while 1 indicates a contract is required. (charged).

The start_time_offset_polarity is a one-bit flag indicating the polarity of offset time defined by the start_ time_offset. For example, 0 indicates proceeding by offset time, while 1 indicates delaying by offset time.

The start_time_offset specifies the offset time since the broadcasting of broadcast content starts until the reproduction of distribution content of the broadcast content starts in a range from -12 hours to +12 hours with a 16-bit field. More specifically, the start_time_offset specifies four elements, i.e., double-digit hour, single-digit hour, double-digit minute, and single-digit minute, of offset time with 4-bit binary-coded decimal (BCD) encoding.

The expiration_date indicates when the term for the reproduction of distribution content expires with a 40-bit field. More specifically, lower 16 bits of modified julian date (MJD) are encoded with 16 bits and the following 24 bits are encoded by six 4-bit BCD numbers to indicate the reproduction (distribution) expiration date. If the distribution expiration date is not defined, "1" is set to the entire 40-bit field.

The uri_char stores, for example, a character string of a uniform resource identifier (URI) indicating the location where distribution content is stored.

Describing the return_to_broadcast_flag, delivery-type, contract_flag, start_time_offset_polarity, start_time_offset,expiration_date,uri_char, and the like in the EIT information I3a as the receipt/reproduction related information eliminates the need for the broadcast receiver 2 to directly check the distribution server 3 as to information related to the receipt and reproduction of content distributed via the communication network 4.

Specific examples of the distribution content format information include extended_video_resolution_format_flag, extended_video_resolution_format, 3D_video_format_flag, 3D_video_format, and the like.

The extended_video_resolution_format_flag is a one-bit flag indicating whether the resolution of video of distribution content is increased from the current broadcast mode. For example, 0 indicates that the resolution is not increased (compliance with the current broadcast mode), while 1 indicates that the resolution is increased.

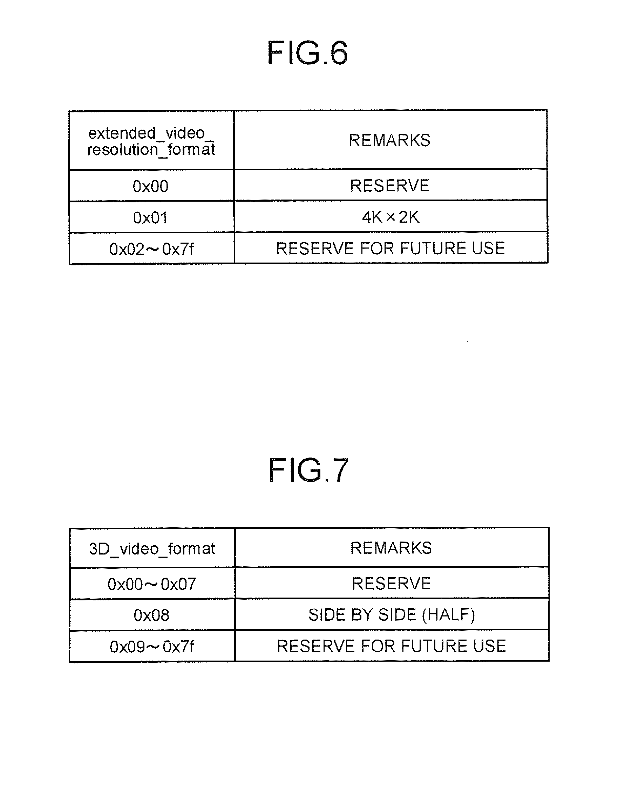

The extended_video_resolution_format indicates information on the resolution increased from the current broadcast mode with an 8-bit field. More specifically, as illustrated in FIG. 6, a value from 0x00 to Ox7f indicates the increased resolution. For example, 0x01 indicates 4K2K resolution.

The 3D_video_format_flag is a one-bit flag indicating whether distribution content contains video in 3D format. For example, 0 indicates that distribution content does not contain video in 3D format, while 1 indicates that distribution content contains video in 3D format.

The 3D_video_format indicates identification information of 3D video format with an 8-bit field. More specifically, as illustrated n FIG. 7, a value from 0×00 to 0×7f indicates which one of various formats such as side-by-side format is the transmission format of a 3D signal contained in distribution content. For example, 0×08 indicates side-by-side format.

Describing the
extended_video_resolution_format_flag,
extended_video_resolution_format, 3D_video_format_flag,
3D video_format, and the like in the EIT information I3a as the distribution content format information eliminates the need for the broadcast receiver 2 to directly check the distribution server 3 as to the format of content distributed via the communication network 4.

As illustrated in FIGS. 2 and 3, data related to broadcast content and SI are multiplexed into a transport stream, and the transmitter 16 transmits the transport stream by digital broadcasting (S2, S3) . More specifically, the transmitter 16 comprises a multiplexer 16a and a channel encoder 16b. The multiplexer 16a multiplexes data related to broadcast content packetized by the PES packetizers 13a, 3b, and 13c and sectioned SI into a transport stream TS1 (FIG. 3, S2). The payload of the transport stream TS1 may be scrambled by a scrambler (not illustrated) to handle conditional access using an entitlement management message (EMM) and an entitlement control message (ECM). The channel encoder 16b performs channel encoding on the transport stream TS1 to generates a transport stream TS2 by orthogonal frequency-divisionmultiplexing (OFDM) or the like. The transport stream TS2 is transmitted from a broadcast antenna (not illustrated) (FIG. 3, S2) .

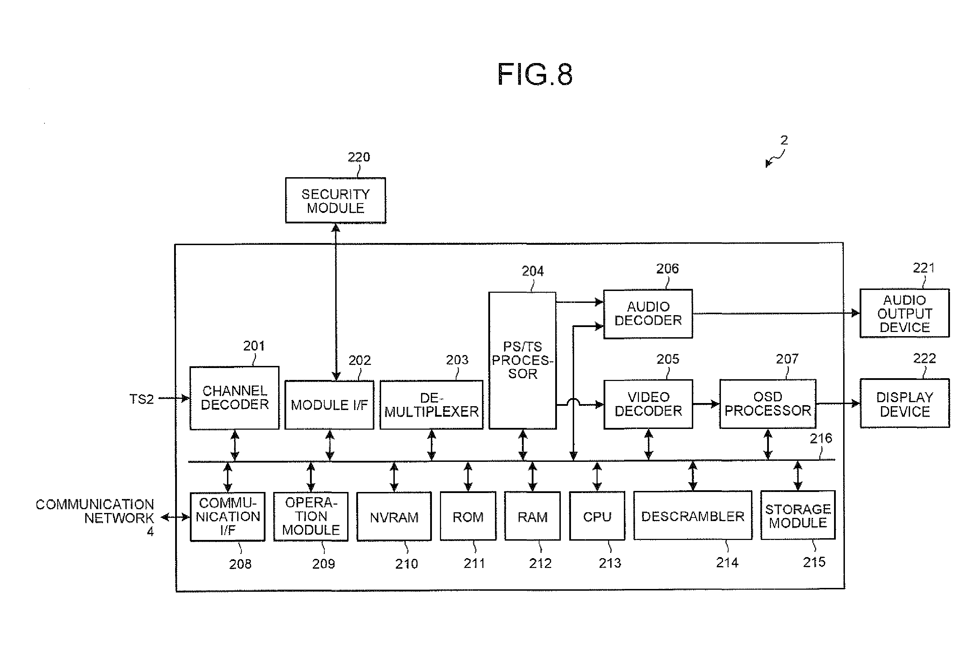

In the following, the configuration of the broadcast receiver 2 will be described. FIG. 8 is a block diagram of the broadcast receiver 2. As illustrated in FIG. 8, the broadcast receiver 2 comprises a channel decoder 201, a module interface (I/F) 202, a demultiplexer 203, a program stream(PS) /TS processor 204, a video decoder 205, an audio decoder 206, an on-screen display (OSD) processor 207, a communication I/F 208, an operation module 209, a non-volatile random access memory (NVRAM) 210, a read only memory (ROM) 211, a random access memory (RAM) 212, a central processing unit (CPU) 213, a descrambler 214, and a storage module 215, which are connected by a bus 216.

The channel decoder 201 decodes the transport stream TS2 received by an antenna (not illustrated) and thereby obtains the transport stream TS1 into which broadcast content and SI are multiplexed. The module I/F 202 is an interface to connect to a security module 220 that stores key information related to conditional access and the like. The demultiplexer 203 separates the broadcast content, the SI, and the like from the transport stream TS1 multiplexed in the broadcast station. The PS/TS processor 204 decodes information packetized in a transport stream and a program stream to restore it to a video signal and an audio signal.

The video decoder 205 decodes the video signal output from the PS/TS processor 204, and outputs the decoded video signal to the OSD processor 207. The audio decoder 206 decodes the audio signal output from the PS/TS processor 204, and outputs the decoded audio signal to an audio output device 221. The audio output device 221 is audio equipment provided with an amplifier, a speaker, and the like. The audio output device 221 reproduces sound corresponding to the audio signal output from the audio decoder 206. The OSD processor 207 performs predetermined OSD processing on the video signal output from the video decoder 205 under the control of the CPU 213, and outputs it to a display device 222. The display device 222 may be, for example, a liquid crystal display (LCD) or the like, and displays a screen based on the output video signal. For example, the display device 222 displays an EPG or the like based on EIT information contained in the SI separated from the transport stream TS1.

The communication I/F 208 is an interface that communicates data with the communication network 4 according to a predetermined communication protocol under the control of the CPU 213. The operation module 209 may include operation keys, a remote controller, or the like, and receives input from the user. The NVRAM 210 stores various types of setting information. For example, the NVRAM 210 stores formats of content that the broadcast receiver 2 can handle as setting information.

The ROM 211 stores programs executed by the CPU 213. The RAM 212 provides the CPU 213 with a work area to execute the programs. The RAM 212 also provides an area to temporarily store the EIT information contained in the SI separated from the transport stream TS1 and the like. The CPU 213 loads the programs from the ROM 211 into the work area of the RAM 212 and sequentially executes them, thereby controlling the overall operation of the broadcast receiver 2. The CPU 213 has a real time clock (RTC) function and is capable of measuring the current time.

The descrambler 214 descrambles the scrambled payload of the received transport stream TS1 based on the key information stored in the security module 220. With the descrambling by the descrambler 214, the broadcast receiver 2 handles conditional access using EMM and ECM. The storage module 215 is a large-capacity storage medium such as a hard disk drive (HDD), and stores, for example, content.

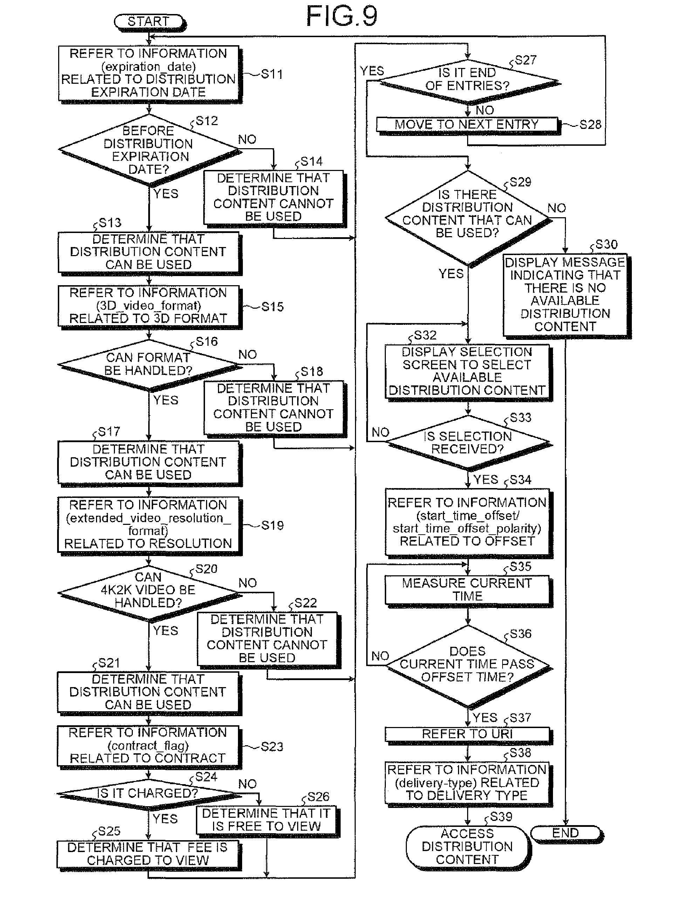

In the following, a description will be given of the operation of the broadcast receiver 2 under the control of the CPU 213. FIG. 9 is a flowchart illustrating an example of the operation of the broadcast receiver 2. In the example of FIG. 9, the operation of the broadcast receiver 2 starts when, upon receipt of input through the operation module 209 to select broadcast content (a program) from those (programs) displayed in a list on, for example, an EPG, it is instructed to check whether the broadcast receiver 2 can use distribution content corresponding to the selected broadcast content (the program).

As illustrated in FIG. 9, when instructed to check whether it is possible to use distribution content corresponding to broadcast content (S10), the CPU 213 reads the EIT information I3a related to the broadcast content based on id (event_id) set for each broadcast content to check whether a descriptor as illustrated in FIG. 5 exists in the description of the EIT information I3a. If a descriptor exists, based on the description of the descriptor, the CPU 213 refers to information (expiration_date) indicating when the term for the reproduction of first entry distribution content expires (S11).

The CPU 213 determines whether the current date and time is before the distribution expiration date described in the EIT information I3a (S12) . If the current date and time is before the distribution expiration date (Yes at S12), since the distribution expiration date of the distribution content corresponding to the broadcast content does not expire, the CPU 213 determines that the distribution content can be used (S13). On the other hand, if the current date and time is after the distribution expiration date (No at S12) , since the distribution expiration date of the distribution content corresponding to the broadcast content expires, the CPU 213 determines that the distribution content cannot be used (S14) . Then, the process moves to S27.

The CPU 213 then refers to information (3D_video_format) related to 3D format (S15), and determines whether the 3D format contained in video of the distribution content is compatible with the broadcast receiver 2 (S16). More specifically, if 3D_video_format describes a 3D format, the CPU 213 determines whether the 3D format is described in the setting information in the NVRAM 210 as a format compatible with the broadcast receiver 2. If the 3D format is compatible with the broadcast receiver 2 (Yes at S16), the CPU 213 determines that the distribution content can be used (S17). On the other hand, if 3D_video_format does not describe a 3D format compatible with the broadcast receiver 2 (No at S16) , the CPU 213 determines that the distribution content cannot be used (S18) .

After that, the CPU 213 refers to information (extended_video_resolution_format) related to resolution (S19) , and determines whether the video of the distribution content has resolution that can be handled by the broadcast receiver 2 (S20) . In this example, assuming that the distribution content is in 4K2K format, the CPU 213 determines whether the broadcast receiver 2 can handle 4K2K format video at S20. Having determined that the broadcast receiver 2 can handle 4K2K format video (Yes at S20), the CPU 213 determines that the distribution content can be used (S21) . On the other hand, if the broadcast receiver 2 cannot handle 4K2K format video (No at S20), the CPU 213 determines that the distribution content cannot be used (S22).

The CPU 213 refers to information (contract_flag) related to contract described in the EIT information I3a (S23), and determines whether the distribution content is charged or free (S24) . If the distribution content is charged (Yes at S24), the CPU 213 determines that a fee is charged to view the distribution content (S25). If the distribution content is free (No at S24) , the CPU 213 determines the distribution content is free to view (S26) . As a result of a series of these determinations, only when the distribution expiration date does not expire and the broadcast receiver 2 can handle the 3D format and 4K2K format video, the CPU 213 determines that the first entry distribution content can be used.

Thereafter, the CPU 213 determines whether entries described in the EIT information I3a are finished, i.e., whether processing is performed to the end of the description of the EIT information I3a (S27) . If an entry remains (No at S27), the CPU 213 increments the entry to the next (S28) , and the process returns to S11. Thus, even if there are distribution contents in different formats, the CPU 213 checks the format, resolution, and the like of each of the distribution contents.

If no entry remains (Yes at S27), the CPU 213 determines whether there is distribution content that can be used through the process from S11 to S28 (S29). If there is no distribution content that can be used (No at S29), the CPU 213 instructs the OSD processor 207 to display on the display device 222 a message indicating that there is no available distribution content related to the broadcast content check of which is instructed (S30). Then, the process ends.

On the other hand, if there is distribution content that can be used (Yes at S29), the CPU 213 instructs the OSD processor 207 to display on the display device 222 a selection screen to select available distribution content related to the broadcast content check of which is instructed (S32). Then, the CPU 213 determines whether input to select distribution content is received through the operation module 209 (S33). If no selection is received (No at S33), the process returns to S32 to wait for the receipt of selection (Yes at S33).

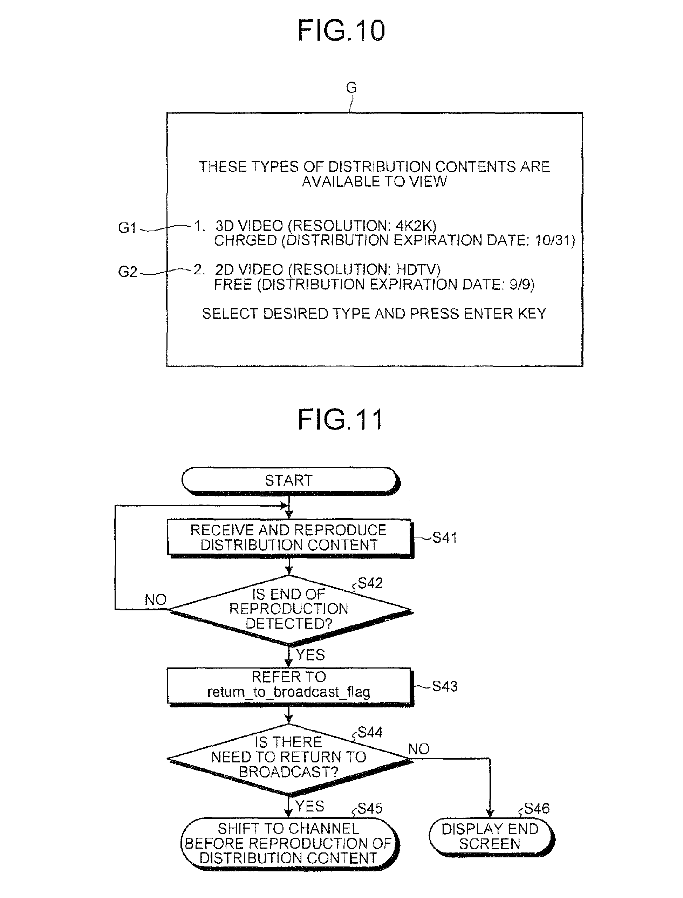

FIG. 10 illustrates an example of a selection screen G. As illustrated in FIG. 10, the selection screen G of the display device 222 displays distribution contents G1 and G2 related to the broadcast content check of which is instructed. With respect to the distribution contents G1 and G2, information is displayed as to whether the 3D format is compatible determined at S16, whether 4K2K format video can be handled determined at S20, and whether they are charged or free determined at S24, the distribution expiration date referred to at S11, and the like. This allows the user to check the format of the distribution contents G1 and G2, if they are charged or free, their distribution expiration date, and the like. The user provides input through the operation module 209 to select any of the distribution contents G1 and G2.

If selection is received (Yes at S33), the CPU 213 refers to information (start_time_offset/ start_time_offset_polarity) related to the offset of the selected distribution content (S34) , and measures the current time (S35).

The CPU 213 determines whether the current time measured at S35 passes the offset time set as the information related to the offset of the distribution content (S36). If the current time does not pass the offset time (No at S36) , the process returns to S35 to wait until the current time passes the offset time (Yes at S36).

If the current time passes the offset time (Yes at S36), the CPU 213 refers to the URI (uri_char) of the distribution content and information (delivery-type) related to the delivery type (S37, S38). The CPU 213 accesses the distribution content stored in a storage area of the distribution server 3 indicated by the URI based on the delivery type (S39) . With this access to the distribution content, the broadcast receiver 2 can obtain the distribution content from the distribution server 3 and reproduce it.

FIG. 11 is a flowchart illustrating an example of the operation of the broadcast receiver 2 to reproduce distribution content. As illustrated in FIG. 11, when the reproduction of distribution content starts by an access to the distribution content, the CPU 213 receives distribution content transmitted from the distribution server 3 via the communication network 4, and reproduces it (S41).

While reproducing the distribution content, the CPU 213 determines whether the end of the reproduction is detected at the end of the distribution content, in response to input through the operation module, or the like (S42). If the end of the reproduction is not detected (No at S42) , the process returns to S41, and the reproduction of the distribution content continues.

If the end of the reproduction is detected (Yes at S42), the CPU 213 refers to return_to_broadcast_flag of the distribution content (S43) , and determines whether there is a need to return to a broadcast received before the reproduction of the distribution content (S44). If there is a need to return to the broadcast (Yes at S44), the CPU 213 shifts to a broadcast channel before the reproduction of the distribution content, and the reproduction of the distribution content ends (S45) . On the other hand, if there is no need to return to the broadcast (No at S44), the CPU 213 instructs the OSD processor 207 to display on the display device 222 an end screen indicating the end of the reproduction of the distribution content. Then, the reproduction of the distribution content ends (S46).

As described above, according to the embodiment, in the broadcast receiver 2, under the control of the CPU 213, the demultiplexer 203 separates SI multiplexed into the received transport stream TS2 therefrom. Besides, under the control of the CPU 213, the broadcast receiver 2 refers to distribution content format information described in the EIT information I3a of the separated SI. The distribution content format information indicates the format of distribution content corresponding to broadcast content that is distributed via the communication network 4. Thus, the broadcast receiver 2 determines whether the format of the distribution content is compatible therewith. If the format of the distribution content is compatible with the broadcast receiver 2, under the control of the CPU 213, the broadcast receiver 2 accesses the distribution content based on the receipt/reproduction related information described in the EIT information I3a. Thus, the broadcast receiver 2 can determine whether the distribution content distributed from the distribution server 3 via the communication network 4 is in a format compatible therewith without direct access to the distribution server 3, and access the distribution content.

The EIT information I3a also describes reproduction information related to the reproduction of the distribution content (for example, start_time_offset/
start_time_offset_polarity, return_to_broadcast_flag, etc.). With reference to the reproduction information, the CPU 213 as a reproduction controller can control the start of the reproduction of the distribution content. For example, the CPU 213 can reproduce the distribution content after the current time passes the offset time based on the description of start_time_offset/ start_time_offset_polarity. Moreover, the CPU 213 can return to a broadcast received before the reproduction of the distribution content upon completion of the reproduction based on the description of return_to_broadcast_flag.

While, in the above embodiment, the broadcast channel is assumed to be of terrestrial broadcasting, satellite broadcasting, cable television (CATV) broadcasting, or the like, there is basically no difference if it is of IP broadcasting using the communication network 4. In the case of IP broadcasting, as described in IPTV Forum Japan (IPTVFJ) STD-0004 IP broadcasting specifications defined by IPTV Forum, multicast distribution is used, and the distribution system is different from unicast distribution in the case of VOD. Thus, upon receiving IP broadcasting, it is possible to recognize VOD distribution content and to determine whether the VOD distribution content can be handled without switching the distribution system to directly access the VOD distribution system.

Although, in the example of FIG. 5, one descriptor is illustrated as describing information on a plurality of distribution contents, it is obvious that one descriptor may be provided with respect to each distribution content.

The various modules of the systems described herein can be implemented as software applications, hardware and/or software modules, or components on one or more computers, such as servers. While the various modules are illustrated separately, they may share some or all of the same underlying logic or code.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A broadcast transmitter comprising:
a generator (14) configured to generate service information including event information table (EIT) information that describes format information indicating a format of distribution content corresponding to broadcast content distributed via a communication network (4); and
a transmitter (16) configured to multiplex the service information into a transport stream and transmit the transport stream.

2. The broadcast transmitter of Claim 1, wherein the format information is related to a format of three dimensional video of the distribution content.

3. The broadcast transmitter of Claim 1 or 2, wherein the format information is related to resolution of video of the distribution content.

4. The broadcast transmitter of one of Claims 1 to 3, wherein the generator (14) is configured to generate the service information including the EIT information that describes information related to receipt of the distribution content.

5. The broadcast transmitter of one of Claims 1 to 4, wherein the generator (14) is configured to generate the service information including the EIT information that describes information related to reproduction of the distribution content.

6. A broadcast receiver comprising:
a separator (203) configured to separate, upon receipt of a transport stream into which service information is multiplexed, the service information from the transport stream;
a determination module (213) configured to refer to format information indicating a format of distribution content described in event information table (EIT) information in the service information to determine whether the format is compatible with the broadcast receiver, the distribution content corresponding to broadcast content distributed via a communication network (4) ; and
an access module (213) configured to access the distribution content according to a determination result of the determination module (213).

7. The broadcast receiver of Claim 6, wherein the format information is related to at least one of a format of three dimensional video of the distribution content and resolution of video of the distribution content.

8. The broadcast receiver of Claim 6 or 7, wherein the EIT information describes reproduction information related to reproduction of the distribution content, the broadcast receiver further comprising
a reproduction controller (213) configured to control the reproduction of the distribution content based on the reproduction information.

9. A broadcast transmission method comprising:
generating, by a generator, service information including event information table information that describes format information indicating a format of distribution content corresponding to broadcast content distributed via a communication network; and
multiplexing, by a transmitter, the service information into a transport stream and transmitting the transport stream.

10. A broadcast receiving method for a broadcast receiver, the method comprising:
upon receipt of a transport stream into which service information is multiplexed, separating the service information from the transport stream;
referring to format information indicating a format of distribution content described in event information table (EIT) information in the service information to determine whether the format is compatible with the broadcast receiver, the distribution content corresponding to broadcast content distributed via a communication network (4); and
accessing the distribution content according to a determination result.
